# EUROPEAN PATENT SPECIFICATION

(11) **EP 4 173 375 B1**
(45) Date of publication and mention of the grant of the patent: **10.07.2024**
(21) Application number: 21737173.1
(22) Date of filing: 26.06.2021
(51) Int. Cl.: H04W 52/02, H04L 1/00, H04L 5/00, H04L 27/00

(54) **WAVEFORM INDICATION USING DCI**
WELLENFORMANZEIGE MIT DCI
INDICATION DE FORME D'ONDE À L'AIDE DE DCI

(30) Priority: 26.06.2020 US 202063045011 P
(43) Date of publication of application: 03.05.2023
(73) Proprietor: Lenovo (Singapore) Pte. Ltd., New Tech Park 556741 (SG)
(72) Inventor: GANESAN, Karthikeyan, 64569 Nauheim (DE); BHAMRI, Ankit, 63322 Rödermark (DE); ALI, Ali Ramadan, 81475 Munich (DE); NANGIA, Vijay, Woodridge, Illinois 60517 (US); GOLITSCHEK EDLER VON ELBWART, Alexander Johann Maria, 64285 Darmstadt (DE)
(74) Representative: Openshaw & Co.
(86) International application number: PCT/IB2021/055720
(87) International publication number: WO 2021/260660

(56) References cited:
- EP-A1- 3 860 229
- WO-A1-2020/063654
- US-A1- 2018 294 916
- US-A1- 2020 068 539

## Description

### FIELD

The subject matter disclosed herein relates generally to wireless communications and more particularly relates to apparatuses, method, and systems for waveform indication using Downlink Control Information ("DCI")-based Wake-Up Signal ("WUS") signaling.

### BACKGROUND

In certain wireless communication systems, a radio access network may support NR-based operation on frequencies between 52.6 GHz and 71 GHz. Due to the expected performance degradation at high frequencies, additional design requirements on Third-Generation Partnership Project ("3GPP") New Radio ("NR") operation on frequencies beyond 52.6 GHz have been considered. In addition to the high path loss, radio frequency ("RF") components of the transmitter and the receiver exhibit nonlinear transfer characteristics which leads to further system degradation.

US2018294916A1 discloses a method for dynamic switching between waveforms on downlink.

### BRIEF SUMMARY

The invention is defined by the appended claims. Claim 1 defines a method. Claims 2 and 15 each define an apparatus. In the following, any method and/or apparatus referred to as embodiments but nevertheless do not fall within the scope of the appended claims are to be understood as examples helpful in understanding the invention.

Disclosed are procedures for waveform indication using DCI. Said procedures may be implemented by apparatus, systems, methods, or computer program products.

One method of a User Equipment ("UE") includes monitoring for Downlink Control Information ("DCI") outside a Discontinuous Reception ("DRX") DRX Active Time, where the DCI contains a waveform indicator. The method includes determining a waveform type for a next occurring DRX Active Time and receiving a downlink transmission on a physical downlink channel during the next occurring DRX Active Time using the determined waveform.

One method of a Radio Access Network ("RAN") node includes determining a waveform type for a next occurring DRX Active Time for a UE and transmitting DCI outside any DRX Active Time of the UE, where the DCI contains a waveform indicator. The method includes transmitting a downlink transmission on a physical downlink channel during the next occurring DRX Active Time using the determined waveform.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for waveform indication using DCI;
Figure 2 is a block diagram illustrating one embodiment of a 5G New Radio ("NR") protocol stack;
Figure 3 depicts diagram illustrating one embodiment of DCP monitoring occasion for DRX adaptation;
Figure 4 depicts a diagram illustrating one embodiment of PDCCH-WUS;
Figure 5 depicts a diagram illustrating one embodiment of DCI format 2_6;
Figure 6 depicts a diagram illustrating one embodiment of a waveform indication procedure;
Figure 7 is a diagram illustrating one embodiment of a user equipment apparatus that may be used for waveform indication using DCI;
Figure 8 is a diagram illustrating one embodiment of a network apparatus that may be used for waveform indication using DCI;
Figure 9 is a flowchart diagram illustrating one embodiment of a first method for waveform indication using DCI; and
Figure 10 is a flowchart diagram illustrating one embodiment of a second method for waveform indication using DCI.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof' includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for waveform indication. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions. In various embodiments, a Wake-Up Signal ("WUS") carried on Physical Downlink Control Channel ("PDCCH") is used to indicate the waveform.

Due to the expected performance degradation at high frequencies, additional design requirements on New Radio ("NR") beyond 52.6 GHz have been considered for further investigation. In addition to the high path loss, radio frequency ("RF") components of the transmitter and the receiver exhibit nonlinear transfer characteristics which leads to further system degradation.

In NR Release 15 ("Rel-15"), multi-carrier (e.g., Orthogonal Frequency Division Multiplexing ("OFDM")) based waveform has been adopted for downlink ("DL") as well as for uplink ("UL"). For some cases especially at cell edge, single carrier (e.g., Discrete Fourier Transform ("DFT") Spread OFDM ("DFT-s-OFDM")) is also used in the uplink ("UL") as an option. However, Cyclic Prefix OFDM ("CP-OFDM") performance degrades at high frequencies (e.g., 52.6 GHz and beyond) due to its sensitivity to phase noise and its high Peak-to-Average Power Ratio ("PAPR") or cubic metric ("CM") that limits the cell coverage. The problems of CP-OFDM at high frequencies become severe as the modulation order and/or the channel bandwidth increases. Therefore, some physical layer channels will be affected more than others.

The above-mentioned problems make a single carrier waveform a suitable candidate at high frequencies due to its natural robustness against phase noise and its low PAPR or CM. In NR Rel-15/16, the UL already supports single carrier (DFT-s-OFDM and/or Single Carrier Frequency Division Multiple Access ("SC-FDMA")). However, the power constraint of the UE especially at cell edge necessitates enhancement of the UL as well by adopting other single carrier waveforms such as Single Carrier Quadrature Amplitude Modulation ("SC-QAM") or Single-Carrier Frequency Domain Equalization ("SC-FDE")/ Cyclic Prefix Single Carrier ("CP-SC") for cell edge scenarios.

One candidate waveform type for use on high frequencies (e.g., 52.6 GHz and beyond) is OFDM-based single carrier waveform such as DFT-s-OFDM waveform. A single carrier waveform may be used for downlink ("DL") due to its low PAPR comparing with CP-OFDM and its better frequency flexibility comparing with pure single carrier candidates such as SC-QAM. On the other hand, although using DFT-s-OFDM or other single carrier candidates for DL enhances the cell coverage, it limits the Multiple-In-Multiple-Out ("MIMO") capabilities of the system and reduces the flexibility of Demodulation Reference Signal ("DMRS") mapping. Some FR4 expected use cases described in 3GPP TR 38.807 such as high data rate enhanced mobile broadband ("eMBB") require high channel bandwidth for high throughput, where MIMO also can play an important rule.

On the other hand, in factory automation/Industrial Internet-of Things ("IIoT") applications, the latency, massive access and reliability are the main Key Performance Indicators ("KPIs"). Other use cases such as backhauling, Integrated Access and Backhaul ("IAB") work mostly under Line-of-Sight ("LOS") conditions, where the fading and power consumption is not the major issue. Mobile data offloading requires coexistence with other systems, e.g., 60 GHz Wi-Fi (i.e., "WiGig"). For short-range high-data rate Device-to-Device ("D2D") communications the coverage is limited and PAPR problem is not the main problem to solve. A trade-off between the cell coverage requirements and Quality of Service ("QoS") requirements in terms of latency and throughput needs to be considered to support different deployment and use case scenarios. Therefore, multiple waveform support for downlink ("DL") and uplink ("UL") is a practical solution to accommodate variant deployment, coverage and use case scenarios to enable high system flexibility and optimize the performance a solution for semi-statically switching of the DL waveform for data transmission.

In this disclosure, the issue is addressed of indicating a DL waveform type to be used by the UE for DL physical channel reception from Primary Cell ("PCell") and non-dormant Bandwidth Part ("BWP") of the secondary cell ("SCell") for the next drx_onDuration occasion using a DCI format that is monitored outside the DRX Active Time of a UE.

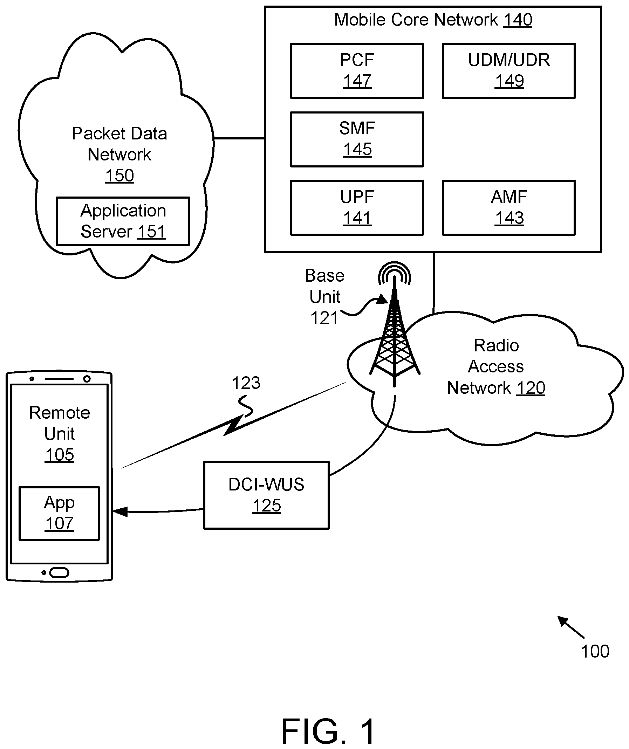

Figure 1 depicts a wireless communication system 100 for waveform indication using DCI, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 140 are depicted in Figure 1, one of skill in the art will recognize that any number of remote units 105, base units 121, wireless communication links 123, RANs 120, and mobile core networks 140 may be included in the wireless communication system 100.

In one implementation, the RAN 120 is compliant with the 5G system specified in the Third Generation Partnership Project ("3GPP") specifications. For example, the RAN 120 may be a Next Generation Radio Access Network ("NG-RAN"), implementing New Radio ("NR") Radio Access Technology ("RAT") and/or Long-Term Evolution ("LTE") RAT. In another example, the RAN 120 may include non-3GPP RAT (e.g., Wi-Fi^{®} or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Here, the RAN 120 is an intermediate network that provides the remote units 105 with access to the mobile core network 140. As described in greater detail below, the base unit(s) 121 may provide a cell operating using a first carrier frequency and/or a cell operating using a second frequency. Cells using the first carrier frequency may form a first frequency layer, while cells using the second carrier frequency may form a second frequency layer.

In some embodiments, the remote units 105 communicate with an application server 151 via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the RAN 120. The mobile core network 140 then relays traffic between the remote unit 105 and the application server 151 in the packet data network 150 using the PDU session. The PDU session represents a logical connection between the remote unit 105 and the User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("SQI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 140 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121. Note that during NR operation on unlicensed spectrum (referred to as "NR-U"), the base unit 121 and the remote unit 105 communicate over unlicensed (i.e., shared) radio spectrum.

In one embodiment, the mobile core network 140 is a 5GC or an Evolved Packet Core ("EPC"), which may be coupled to a packet data network 150, like the Internet and private data networks, among other data networks. A remote unit 105 may have a subscription or other account with the mobile core network 140. In various embodiments, each mobile core network 140 belongs to a single mobile network operator ("MNO"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the RAN 120, a Session Management Function ("SMF") 145, a Policy Control Function ("PCF") 147, a Unified Data Management function ("UDM"") and a User Data Repository ("UDR"). Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network (DN), in the 5G architecture. The AMF 143 is responsible for termination ofNAS signaling, NAS ciphering & integrity protection, registration management, connection management, mobility management, access authentication and authorization, security context management. The SMF 145 is responsible for session management (i.e., session establishment, modification, release), remote unit (i.e., UE) IP address allocation & management, DL data notification, and traffic steering configuration of the UPF 141 for proper traffic routing.

The PCF 147 is responsible for unified policy framework, providing policy rules to CP functions, access subscription information for policy decisions in UDR. The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 149.

In various embodiments, the mobile core network 140 may also include a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), an Authentication Server Function ("AUSF"), or other NFs defined for the 5GC. When present, the AUSF may act as an authentication server and/or authentication proxy, thereby allowing the AMF 143 to authenticate a remote unit 105. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed. In various embodiments, a first set of set of network slices may be prioritized for use with a first carrier frequency, while a second set of network slices may be prioritized for use with a second carrier frequency. As discussed in greater detail below, the RAN 120 sends Downlink Control Information ("DCI") containing a Wake-Up Signal ("WUS") 125 to a remote unit 105 (i.e., sent via the base unit 121) so that the remote unit 105 enter an active state (i.e., DRX Active time). Moreover, the WUS contains a waveform indicator that indicates a waveform type the remote unit 105 is to use to communicate during an active time.

While Figure 1 depicts components of a 5G RAN and a 5G core network, the described embodiments for performing enhanced DM-RS configuration apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "RAN node" is used for the base station but it is replaceable by any other radio access node, e.g., gNB, eNB, Base Station ("BS"), Access Point ("AP"), etc. Further, the operations are described mainly in the context of 5G NR. However, the proposed solutions/methods are also equally applicable to other mobile communication systems supporting enhanced DM-RS configuration.

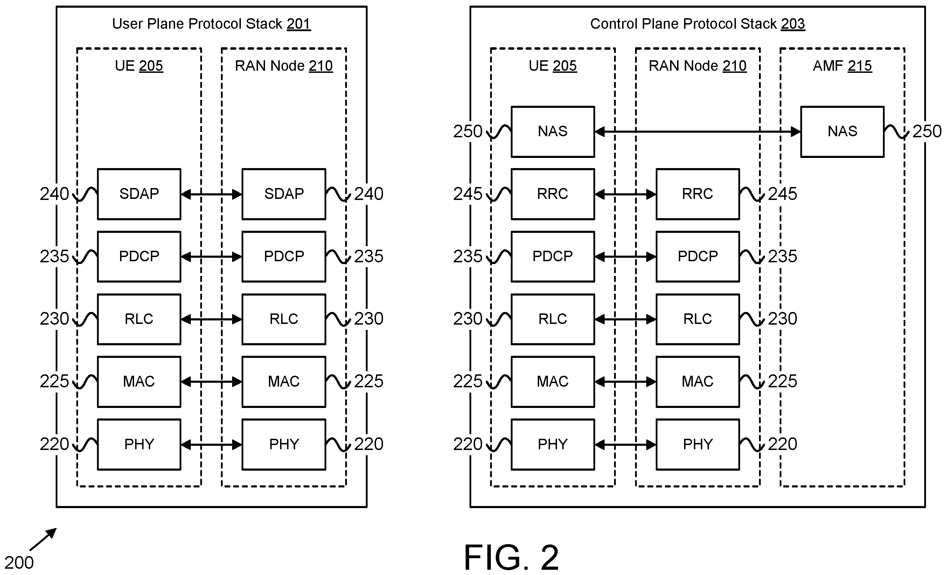

Figure 2 depicts a NR protocol stack 200, according to embodiments of the disclosure. While Figure 2 shows the UE 205, the RAN node 210 and an AMF 215 in a 5G core network ("5GC"), these are representative of a set of remote units 105 interacting with a base unit 121 and a mobile core network 140. As depicted, the protocol stack 200 comprises a User Plane protocol stack 201 and a Control Plane protocol stack 203. The User Plane protocol stack 201 includes a physical ("PHY") layer 220, a Medium Access Control ("MAC") sublayer 225, the Radio Link Control ("RLC") sublayer 230, a Packet Data Convergence Protocol ("PDCP") sublayer 235, and Service Data Adaptation Protocol ("SDAP") layer 240. The Control Plane protocol stack 203 includes a physical layer 220, a MAC sublayer 225, a RLC sublayer 230, and a PDCP sublayer 235. The Control Plane protocol stack 203 also includes a Radio Resource Control ("RRC") layer 245 and a Non-Access Stratum ("NAS") layer 250.

The AS layer (also referred to as "AS protocol stack") for the User Plane protocol stack 201 consists of at least SDAP, PDCP, RLC and MAC sublayers, and the physical layer. The AS layer for the Control Plane protocol stack 203 consists of at least RRC, PDCP, RLC and MAC sublayers, and the physical layer. The Layer-2 ("L2") is split into the SDAP, PDCP, RLC and MAC sublayers. The Layer-3 ("L3") includes the RRC sublayer 245 and the NAS layer 250 for the control plane and includes, e.g., an Internet Protocol ("IP") layer and/or PDU Layer (not depicted) for the user plane. L1 and L2 are referred to as "lower layers," while L3 and above (e.g., transport layer, application layer) are referred to as "higher layers" or "upper layers."

The physical layer 220 offers transport channels to the MAC sublayer 225. The physical layer 220 may perform a Clear Channel Assessment and/or Listen-Before-Talk ("CCA/LBT") procedure using energy detection thresholds, as described herein. In certain embodiments, the physical layer 220 may send a notification of UL Listen-Before-Talk ("LBT") failure to a MAC entity at the MAC sublayer 225. The MAC sublayer 225 offers logical channels to the RLC sublayer 230. The RLC sublayer 230 offers RLC channels to the PDCP sublayer 235. The PDCP sublayer 235 offers radio bearers to the SDAP sublayer 240 and/or RRC layer 245. The SDAP sublayer 240 offers QoS flows to the core network (e.g., 5GC). The RRC layer 245 provides for the addition, modification, and release of Carrier Aggregation and/or Dual Connectivity. The RRC layer 245 also manages the establishment, configuration, maintenance, and release of Signaling Radio Bearers ("SRBs") and Data Radio Bearers ("DRBs").

The NAS layer 250 is between the UE 205 and the 5GC 215. NAS messages are passed transparently through the RAN. The NAS layer 250 is used to manage the establishment of communication sessions and for maintaining continuous communications with the UE 205 as it moves between different cells of the RAN. In contrast, the AS layer is between the UE 205 and the RAN (i.e., RAN node 210) and carries information over the wireless portion of the network.

In NR Release 15, multiple waveforms are supported. Specifically, the uplink ("UL") supports both CP-OFDM and DFT-s-OFDM. However, the configuration is only semi-static to select one of these, e.g., by enabling (alternatively, disabling) the parameter 'transformPrecoding.' For example, the RAN node 210 may switch between multicarrier CP-OFDM and single carrier DFT-s-OFDM via RRC configurations. The higher layer parameter transformPrecoder in pusch-Config / configuredGrantConfig or msg3-transformPrecoding in RACH-ConfigCommon provide the indication to enable or disable the transform pre-coder (DFT-s-OFDM) for PUSCH. The UE 205 considers the transform precoding either 'enabled' or 'disabled' based on reading these messages, and the RAN node 210 applies simultaneous receptions of multiple UEs 205 with different waveforms.

Fundamentally, CP-OFDM suffers with the issue of high PAPR, and the issue becomes even more pronounced with higher frequency range. In Rel-17, NR frequency range has been extended from 52.6 - 71 GHz, however, no change to waveform for DL and UL, only high Subcarrier Spacing ("SCS") adopted to deal with phase noise issue. However, future releases are likely to support new waveform types and even further extension of NR operation, e.g., from 71 - 114.25 GHz.

Assuming, that support is added for a new waveform while also supporting current (i.e., Rel-15, Rel-16 and Rel-17) waveforms, then the issue of multiple waveform indication/switching/waveform becomes relevant. Depending up on modulation order for different channels, coverage requirements and other potential factors, it might make sense to allow multiplexing/transmission/repetition of control and/or data using multiple waveforms.

If Secondary Cell ("SCell") is in the dormant state, the UE 205 stops monitoring PDCCH in the dormant SCell, but activities such as CSI measurement/reporting and Radio Resource Management ("RRM") measurement are not impacted. In Rel-16 NR, the dormancy behavior can be implemented at BWP level. The BWP that supports dormancy behavior for the SCell is referred to as dormant BWP, where PDCCH monitoring occasion is not configured. The transition between dormancy behavior and non-dormancy behavior is implemented based on BWP switching.

The SCell dormancy indication can be conveyed by DCI with different DCI formats for UEs 205 to detect outside and within DRX Active Time.

When it is within DRX Active Time, the SCell dormancy indication field is carried by DCI with DCI formats used by data scheduling (i.e., DCI format 0_1 and DCI format 1_1). The information fields that indicate dormancy behavior are in the form of bitmap, where each bit corresponds to one configured SCell group.

When it is outside DRX Active Time, UE 205 detects DCI with DCI format 2_6 on the Primary Cell ("PCell") or the Primary Secondary Cell ("PSCell") for the SCell dormancy indication. In addition to wake-up indication, the SCell dormancy indication can be carried by the same DL control signaling with WUS using DCI format 2_6. To reduce the blocking rate and resource overhead, DCI format 2_6 can be used to convey information for one or more UEs 205 in a group. Each UE 205 in the group is configured with the location of wakeup indication, while the SCell dormancy indication of that UE 205 is located immediately after the wake-up indication.

Single carrier waveform such as DFT-s-OFDM or SC-FDE (or Single Carrier Frequency Division Multiplexing ("SC-FDM") or CP-SC) have low PAPR comparing with OFDM and thus improving the coverage of the network especially at cell edge and/or at high carrier frequency. However, OFDM has better support for MIMO and better spectrum efficiency as well as efficient Reference Signal ("RS") placement in time-frequency grid than Single Carrier ("SC") waveforms. On the other hand, some UEs will be equipped only with one waveform for the sake of simplicity. Therefore, multi waveform support for DL and UL is a practical solution to accommodate variant deployment, coverage and use case scenarios.

For UL/DL having multiple waveforms, the RAN node 210 (e.g., a gNB) may select the waveform (possibly including subcarrier spacing) based on some parameters such as the used carrier frequency, UE measurement (RS Received Power ("RSRP"), RS Received Quality ("RSRQ"), and/or Signal-to-Interference-Plus-Noise Ratio ("SINR")), UE location, UE 205 and RAN node 210 radio frequency capabilities, UE power status (e.g., Power Headroom ("PH") report), UE assistance information (e.g., DL transform precoding recommendation based on path loss ("PL") estimate), indication of UE battery power status, etc. These factors can affect the dynamic requirements for optimal waveform. For example, the battery/power status of the UE 205 may aid the RAN node 210 in choosing the right waveform, as some waveforms require higher signal processing reception complexity than others, and thus save some UE power at critical battery power status.

A Radio Access Network ("RAN") node 210 (e.g., gNB) may configure/transmit different waveform to plurality of UEs in a Time Division Multiplexing ("TDM") manner by transmitting in different slots or symbols and also in Frequency Division Multiplexing ("FDM") manner in different BWPs. The UE 205 may support either one or even both multicarrier and single carrier waveform. In such scenarios, the RAN node 210 may choose to transmit one of a set of waveform types (e.g., single or multicarrier waveform) and network node may either dynamically switch the waveform for the UE 205 or semi-statically configure the UE 205 with a waveform type. The UE 205 may also be configured to be receive using multiple waveform types in a scheduling interval for one or more DL physical channels.

For DL having multiple waveforms, the RAN node 210 may select the waveform (possibly including subcarrier spacing) based on some parameters such as the used carrier frequency, UE measurement (RSRP/RSRQ/SINR)/location, UE 205 and RAN node 210 RF capabilities, UE power status (e.g., PH report), UE assistance information (e.g., DL transform precoding recommendation based on PL estimate), indication of UE battery power status etc. These factors can affect the dynamic requirements for optimal waveform. UE battery can help the RAN node 210 to choose the right waveform, since some waveforms require higher signal processing reception complexity than others, and thus save some UE power at critical battery power status.

One of the key benefits of the proposed solutions is to allow for increased reliability by providing additional degree of diversity to allow waveform switching between different transmissions occasions across same or different beams.

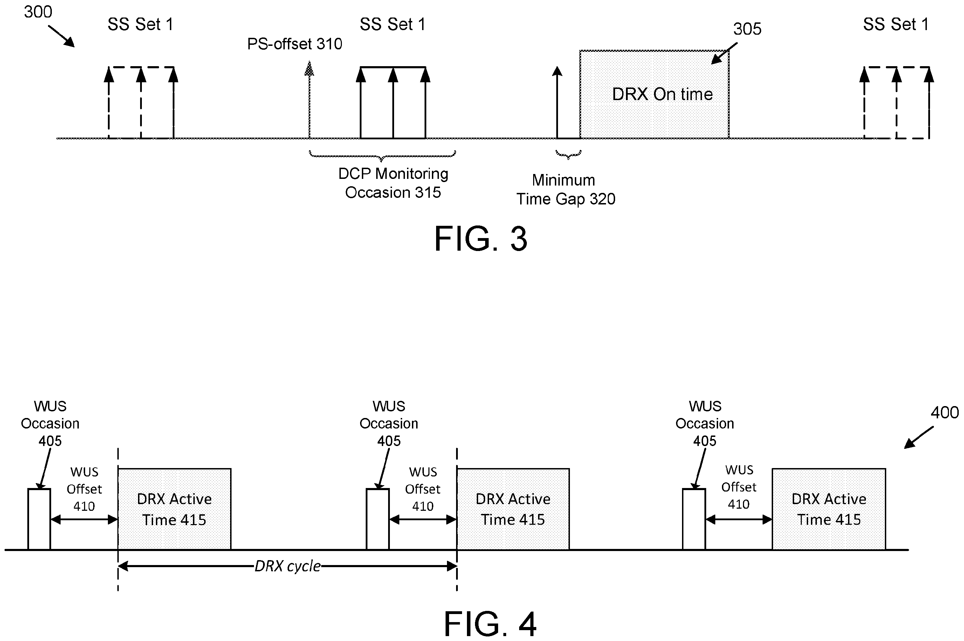

Figure 3 depicts a DRX adaptation power saving technique 300 to configure the PDCCH-based power saving signal/channel at the active BWP before the beginning of DRX On time 305 (also referred to as "DRX Active Time") for UE monitoring with the indication of UE wakeup (or not) depending on whether there is data for the UE 205 to receive. A new DCI format 2_6 was introduced with Cyclic Redundancy Check ("CRC") scrambled by Power Saving Radio Network Temporary Identifier ("PS-RNTI") which contains the wakeup indication as well as Secondary Cell ("SCell") dormancy indication if configured.

The power saving offset ("PS-offset") 310 is semi-statically configured before DRX ON time defining the start of the interval for the DCI with CRC scrambled by PS-RNTI ("DCP") monitoring occasion 315 as shown in Figure 3. During the DCP monitoring occasion 315, the UE 205 monitors the Search Space ((i.e., Search Space ("SS") Set 1) for DCP. In certain embodiments, more than one monitoring occasions 315 may be configured for DCP on the Primary Cell ("PCell") for Carrier Aggregation ("CA") and on Special Cell ("SpCell") for Dual Connectivity ("DC") based on the Search Space (i.e., Search Space ("SS") Set 1) and Control Resource Set ("CORESET") configurations.

As used herein, CORESET is a set of physical resources (i.e., a specific area on NR Downlink Resource Grid) and a set of parameters that is used to carry PDCCH/DCI. In contrast to the LTE PDCCH area (the first 1,2,3,4 OFDM symbols in a subframe) where the control region always spread across the whole channel bandwidth, in NR the CORESET region is localized to a specific region in frequency domain. The Search Space refers to an area within a CORESET that the UE 205 is to monitor to detect a specific PDCCH/DCI. There are two large categories of Search Space called CSS (Common Search Space) and USS (UE-specific Search Space). Which Search Space the UE 205 has to monitor is defined by Radio Network Temporary Identifier ("RNTI") type or RRC configuration.

The minimum time gap 320 is specified as the UE processing time as shown in Figure 3. The UE 205 is not required to monitor DCP (i.e., DCI with CRC scrambled by PS-RNTI) at the interval of minimum time gap and within DRX On time 305.

When DCP monitoring occasion 315 collides with other procedures with higher priority in PDCCH monitoring, the monitoring occasion is considered invalid. The UE 205 is to follow legacy behavior when all the configured monitoring occasions are invalid.

In one embodiment, the UE 205 is configured by RRC signaling to wake up when no DCP is detected with valid monitoring occasions 315. In another embodiment, the UE 205 is configured by RRC signaling to not wake up when no DCP is detected with valid monitoring occasions 315.

Note that a same DCP may be configured to control PDCCH monitoring during onduration for one or more UEs independently. The UE 205 may also be configured by RRC signaling whether to report periodic L1-RSRP or periodic CSI/L1-SINR when UE is not indicated to wake up at the DRX On time 305.

Figure 4 depicts one example of PDCCH-WUS signaling 400. The RAN node 210 (e.g., gNB) indicate the DL waveform to be used by the UE 205 for the subsequent DL transmission by the RAN node 210 (i.e., DL reception by UE 205) in the next occurrence of the drx-onDurationTimer using PDCCH-WUS (e.g., DCP) signaling so that the UE 205 knows in advance which waveform type (e.g., whether multicarrier or single carrier waveform and specific waveforms within these categories) to be used for the reception of Physical Downlink Control Channel ("PDCCH") or Physical Downlink Shared Channel ("PDSCH") (or both) during the drx-onDurationTimer.

PDCCH-WUS may also indicate the waveform to be used for the reception of PDCCH or PDSCH or both for non-dormant Bandwidth Part ("BWP") and/or Radio Resource Management ("RRM") measurements for dormant BWP of SCells during the drx-onDurationTimer.

The UE 205 monitors for PDCCH-WUS during a WUS occasion 405. Note that the WUS occasion 405 may correspond to the DCP monitoring occasion 305. As depicted, there is a WUS offset 410 between the WUS occasion 405 and the next occurring DRX Active Time 415 (i.e., DRX On period). In various embodiments, the WUS offset 410 is larger than the minimum time gap 320 described above.

During the DRX Active Time 415 (i.e., DRX On period), the waveform may be indicated as part of DCI (e.g., DCI format 1_1 or DCI format 0_1) for transitioning from non-dormant BWP to dormant BWP. In one embodiment, a separate Waveform indicator for each SCell or SCell group (i.e., group of configured SCells) is used. In another embodiment, a combined waveform indicator is used for all SCells to be used for non-dormant BWP and/or dormant BWP.

The network (e.g., RAN node 210) semi-statically configures a waveform type (e.g., either a single carrier or multicarrier DL waveform) to be used for PDCCH-based WUS reception for a UE 205.

According to embodiments of a first solution, the waveform is indicated using PDCCH-WUS for the primary cell ("PCell"). The DL Waveform type for PCell - e.g., single carrier or multicarrier - to be used for PDCCH and/or PDSCH (i.e.,, DL physical channels) reception in the next occurrence of the drx-onDurationTimer (i.e., DRX Active Time) may be indicated in the PDCCH-WUS, i.e., using DCI Format 2_6 or another DCI format that is monitored outside DRX Active Time for a UE 205.

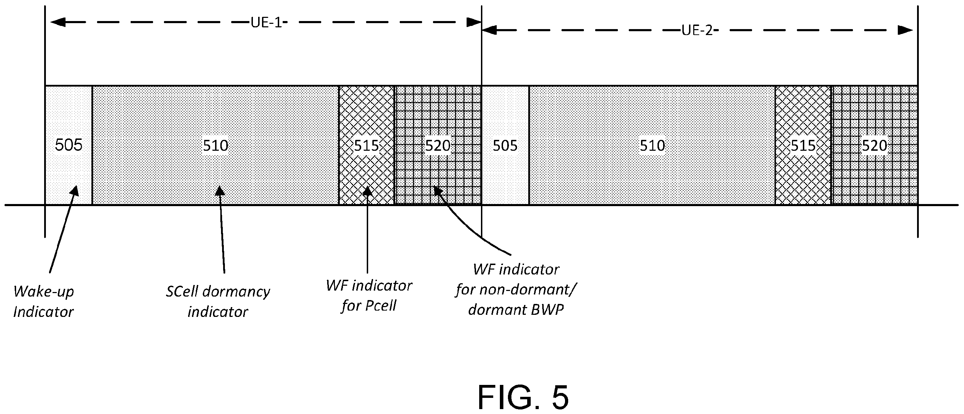

Figure 5 depicts an example structure of DCI 500 having the DCI format 2_6, according to embodiments of the disclosure. The depicted DCI 500 contains sets of indications for two UEs, i.e., a first UE ("UE-1") and a second UE ("UE-2"). Each set of indications includes a Wake-Up indicator 505, a SCell Dormancy indicator 510, a Waveform ("WF") indicator 515 for PCell, and a WF indicator 520 for non-dormant (and/or dormant) BWP(s).

In a first implementation of the first solution, a new size parameter (e.g., *SizeDCI_2-6*) is signaled to the UE 205 by higher layer signaling. Additionally, the location of the waveform indication bit(s) in DCI format 2_6 (or similar) is semi-statically configured per UE by a high layer parameter, e.g., *WfIDPositionDCI2-6.* In one embodiment, locations for separate PCell and SCell waveform indicators are semi-statically configured for DCI Format 2_6. In another embodiment, the location of a combined PCell and SCell waveform indicator is semi-statically configured for DCI Format 2_6.

In a second implementation of the first solution, one or more code points added in the DCI format 2_6 provides information about the DL waveform type to be used for the reception of each of the DL Physical channel in the next occurrence of the drx-onDurationTimer (i.e., DRX Active Time 415).

In a third implementation of the first solution, one bit code point added in the DCI format 2_6 provides information about the DL waveform type to be used for the reception of all DL Physical channels in the next occurrence of the drx-onDurationTimer (i.e., DRX Active Time 415).

In a fourth implementation of the first solution, multiple bits are added in DCI format 2_6 providing information about different single carrier waveforms or different multicarrier waveforms for DL physical channels.

In a fifth implementation of the first solution, one or more code point in the DCI format 2_6 may indicate CORESET ID or Search Space ID or DCI format and the corresponding waveform to be used for its reception in the next occurrence of the drx-onDurationTimer (i.e., DRX Active Time 415).

In a sixth implementation of the first solution, DCI format 2_6 may indicate monitoring occasion for the Search Space ID or DCI format and/or the corresponding waveform to be used for the reception of Search Space or DCI format in the next occurrence of the drx-onDurationTimer (i.e., DRX Active Time 415).

In a seventh implementation of the first solution, the waveform indicated by DCI-WUS for the DL physical channels is applicable to the UE 205 during its DRX Active Time 415 (i.e., when the DRX On Timer is running) only when the DCI-WUS is received at a slot/symbol equal or less than the minimum time gap (in terms of slot or symbols) before the DRX Active Time 415 (i.e., defined by drx-onDurationTimer) configured by higher layer for the UE 205, otherwise the UE is expected to receive use the default waveform for receiving the DL Physical channel during the next DRX Active Time 415.

In an eighth implementation of the first solution, the UE 205 is expected to use the default waveform for receiving the DL Physical channel during the next DRX Active Time 415, when it does not decode DCI-WUS or does not detect DCI-WUS before the DRX Active Time 415.

In a ninth implementation of the first solution, the validity of the waveform indicated by DCI-WUS is applicable for the entire DRX Active Time 415 of a DRX cycle unless there is any explicitly indication received by DCI or higher layer signaling during the active period of a DRX cycle.

In a tenth implementation of the first solution, a Maximum allowed time duration in terms of number of slots within the DRX Active Time 415 of a DRX cycle for a UE 205 may be configured by a higher layer signaling. Alternatively, the Maximum allowed time duration may be explicitly indicated in the DCI-WUS.

In certain embodiments of the first solution, in the absence of information about DL waveform to be used for PDCCH in the next occurrence of the drx-onDurationTimer (i.e., DRX Active Time 415), the UE 205 may use the same waveform that it used to receive the PDCCH_WUS. Alternatively, the UE 205 may use a default waveform configured as part of RRC PDCCH configuration or may continue to use the waveform type used in the previous onDuration (when the DRX onDuration timer was running, e.g., when PDCCH-WUS Wake-up indication bit was set to '1' or UE configured to wake-up when the PDCCH-WUS is not detected).

In certain embodiments of the first solution, in the absence of information about the DL waveform to be used for PDSCH, the UE 205 may use the same waveform that it used to receive the PDCCH. Alternatively, the UE 205 may use a default waveform configured as part of RRC PDSCH configuration or may continue to use the waveform type used in the previous onDuration (when the DRX onDuration timer was running e.g., when PDCCH-WUS Wake-up indication bit was set to '1' or UE configured to wake-up when the PDCCH-WUS is not detected).

According to embodiment of a second solution, a default waveform is semi-statically configured, considering dormant and non-dormant bandwidth parts of secondary cells. Here, the RAN node 210 may semi-statically configure the default DL waveform type for dormancySCellGroups considering dormant BWP and non-dormant BWP and as well considering within DRX Active Time 415 and outside DRX Active Time 415.

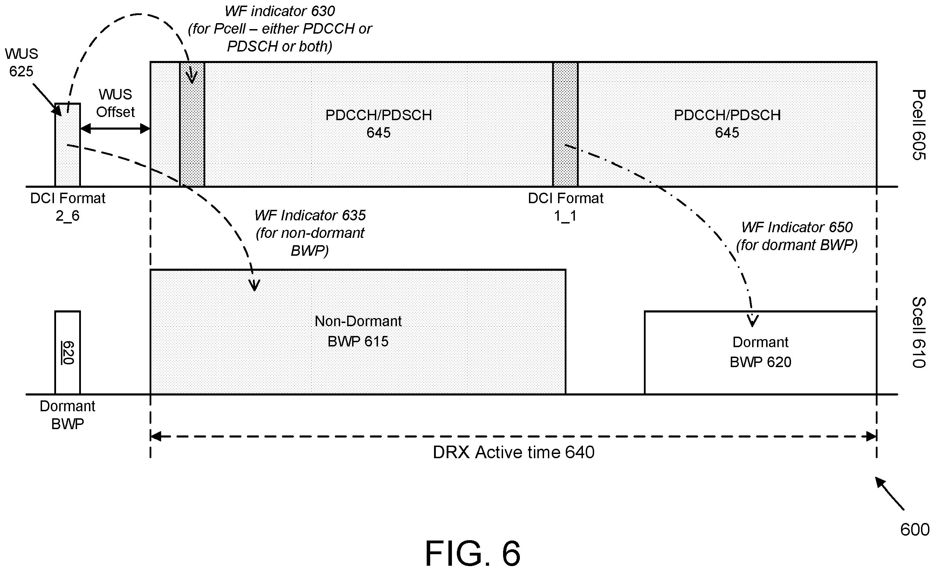

Figure 6 depicts a procedure 600 for waveform indication for both PCell 605 and SCell 610, according to embodiments of the disclosure. Note that the SCell 610 includes both a non-dormant BWP 615 and a dormant BWP 620. During a WUS occasion the UE 205 receives a WUS 625 (i.e., DCI Format 2_6) on the PCell. Here, the received WUS 625 includes both a waveform indicator 630 for the PCell 605 and a waveform indicator 635 for the non-dormant BWP 615.

The UE 205 wakes up according to the received WUS and initiates the drx-onDuration timer. During the DRX Active Time 640, the UE 205 receives PDCCH and/or PDSCH 645 on the PCell 605 using the indicated waveform. Additionally, the UE 205 monitors and/or communicates on the non-dormant BWP 615 during a first portion of the DRX Active Time 640 using the indicated waveform.

During the DRX Active Time 640 and prior to switching BWP, the UE 205 receives a second DCI (i.e., DCI Format 1_1) which contains a waveform indicator 650 for the dormant BWP 615.

In one implementation of the second solution, the RAN node 210 may semi-statically configure the default DL waveform for dormant BWP in various ways:
- One or more codepoint in the RRC dedicated signaling indicating the default waveform type for dormant BWP, where each of the dormant BWP of SCell may be separately configured for a default waveform type, otherwise a single default waveform type may be configured for all dormant BWPs of SCells
- Alternatively, the default DL waveform type of dormant BWP of SCells may have similar or separate configurations within and outside the DRX Active Time

In another implementation of the second solution, the RAN node 210 may semi-statically configure in the UE 205 (e.g., using one or more code points) either a similar/same default DL waveform or a separate default DL waveform for dormant and non-dormant BWPs.

In another implementation of the second solution, the RAN node 210 may semi-statically configure in the UE 205 (e.g., using one or more code points) a similar/same default DL waveform or a separate default DL waveform for each of the DL physical channel and similar/same or a separate waveform type for each non-dormant BWP.

If there is no default waveform configured for receiving PDSCH in case of non-dormant BWP of a SCell, then the UE 205 is expected to receive PDSCH using the same waveform used for receiving PDCCH of that non-dormant BWP.

In an alternative embodiment of the second solution, the RAN node 210 may semi-statically configure in the UE 205 either a similar/same default waveform type or a separate default waveform type for each BWP configured in SCell(s) and for each of the DL physical channel.

According to embodiments of a third solution, the waveform is indicated for SCells using PDCCH-WUS when moving from dormant to non-dormant BWP considering both within DRX Active Time and outside DRX Active Time). Here, the DL Waveform type for SCells - i.e., single carrier or multicarrier - to be used for PDCCH and/or PDSCH reception in the next occurrence of the drx-onDurationTimer to be used in the non-dormant BWP may be indicated in the DCI Format 2_6 or another DCI format that is monitored outside DRX Active Time of a UE 205.

In the first implementation of the third solution, a new size *SizeDCI_2-6* is signaled to the UE by higher layer, and the location of waveform indication bit in DCI format 2_6 or similar is configured per UE by a high layer parameter *WfIDPositionDCI2-6_nondormancy.*

In another implementation of the third solution, a separate waveform indicator code point as part of DCI Format 2_6 or another DCI format that is monitored outside DRX Active Time of a UE may be configured for each SCell(s) in a group (for non-dormant BWP) where each bit corresponds to one of the configured SCell(s), with MSB to LSB of the following fields concatenated in the order below corresponding to the SCell with lowest to highest SCell index

In another implementation of the third solution, a common waveform indicator may be configured for all SCells (for non-dormant BWP) in a group.

In another implementation of the third solution, DCI format 2_6 may indicate CORESET id or search space id or DCI format and/or the corresponding waveform to be used for the reception of CORESET or search space or DCI format in the next occurrence of the drx-onDurationTimer for non-dormant BWP.

In another implementation of the third solution, DCI format 2_6 may indicate waveform to be used for receiving RRM measurement signals from gNB in the next occurrence of the drx-onDurationTimer for dormant BWP.

The DL Waveform type for SCells - single carrier or multicarrier waveform type to be used for PDCCH and/or PDSCH reception for the non-dormant BWP and/or single carrier or multicarrier waveform type to be used for RRM measurement during dormant BWP may be indicated in DCI (e.g., DCI Format 1_1 or DCI format 0_1) or another DCI format that is monitored within the DRX Active Time of a UE 205.

According to a fourth solution, the waveform is indicated via waveform signaling. The network node may semi-statically configure a waveform type (e.g., either a single carrier or multicarrier DL waveform) to be used for PDCCH based WUS reception for a UE 205.

In one implementation of the fourth solution, RRC signaling for CORESET, or Search Space configuration carries an indicator for waveform type where the waveform type may indicate - single carrier or multicarrier waveform. In another implementation of the fourth solution, the DCP-config parameter carries an indicator for waveform type for receiving WUS. The waveform used for PDCCH-based WUS may be differently configured for PCell and PSCell.

If the CORESET (or Search Space configuration) of DCI Format 2_6 does not include the waveform type, then the UE 205 is expected to receive the PDCCH-based WUS with the same waveform as that of CORESET 0 or SSB (SS/PBCH block).

In another implementation of the fourth solution, if the UE 205 is not configured with waveform type for PDCCH based WUS, then the same waveform as that of CORESET 0 or SSB is used for PDCCH-WUS in PCell while same waveform used to receive CORESET of PSCell is used for receiving the PDCCH-WUS.

According to a fifth solution, the techniques of the above solutions may be used to indicate UL waveform type and/or default waveform type, e.g., for both PCell and SCell.

In one implementation of the fifth solution, both the DL and the UL waveform types may be configured the same/similar. In another implementation of the fifth solution, the DL and UL waveform types are indicated separately. In another implementation of the fifth solution, a different location offset per UE may be configured by higher layer per UE to indicate the start of UL waveform field in the DCI.

In one implementation, UL Configured Grant configuration may also indicate UL waveform type to be used. In another implementation, the UE 205 may use the indicated UL waveform type in DCI-WUS for transmitting the UL configured grant and/or dynamic grant during the DRX Active Time of a DRX cycle of a UE 205. In another implementation, the UE 205 may ignore the indicated waveform type for CG and continue to use the same UL waveform type as mentioned in the configured grant configuration until the UE 205 receives a configured grant reconfiguration message from higher layer.

In another implementation, a UE 205 follows the waveform type indicated in DCI to perform DL and/or UL data transmission within the DRX Active Time of a DRX cycle and the UE 205 follows the waveform type to perform DL and/or UL data transmission within the DRX Active Time of a DRX cycle when it receives a DCI outside the DRX Active Time unless and until the UE 205 receives second DCI with second waveform type within the DRX Active Time of a DRX cycle.

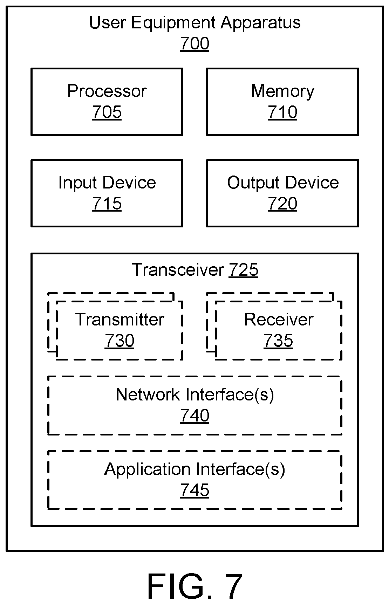

Figure 7 depicts a user equipment apparatus 700 that may be used for performing enhanced DM-RS configuration, according to embodiments of the disclosure. In various embodiments, the user equipment apparatus 700 is used to implement one or more of the solutions described above. The user equipment apparatus 700 may be one embodiment of the remote unit 105 and/or the UE 205, described above. Furthermore, the user equipment apparatus 700 may include a processor 705, a memory 710, an input device 715, an output device 720, and a transceiver 725.

In some embodiments, the input device 715 and the output device 720 are combined into a single device, such as a touchscreen. In certain embodiments, the user equipment apparatus 700 may not include any input device 715 and/or output device 720. In various embodiments, the user equipment apparatus 700 may include one or more of: the processor 705, the memory 710, and the transceiver 725, and may not include the input device 715 and/or the output device 720.

As depicted, the transceiver 725 includes at least one transmitter 730 and at least one receiver 735. In some embodiments, the transceiver 725 communicates with one or more cells (or wireless coverage areas) supported by one or more base units 121. In various embodiments, the transceiver 725 is operable on unlicensed spectrum. Moreover, the transceiver 725 may include multiple UE panels supporting one or more beams. Additionally, the transceiver 725 may support at least one network interface 740 and/or application interface 745. The application interface(s) 745 may support one or more APIs. The network interface(s) 740 may support 3GPP reference points, such as Uu, N1, PC5, etc. Other network interfaces 740 may be supported, as understood by one of ordinary skill in the art.

The processor 705, in one embodiment, may include any known controller capable of executing computer-readable instructions and/or capable of performing logical operations. For example, the processor 705 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 705 executes instructions stored in the memory 710 to perform the methods and routines described herein. The processor 705 is communicatively coupled to the memory 710, the input device 715, the output device 720, and the transceiver 725.

In various embodiments, the processor 705 controls the user equipment apparatus 700 to implement the above described UE behaviors. In certain embodiments, the processor 705 may include an application processor (also known as "main processor") which manages application-domain and operating system ("OS") functions and a baseband processor (also known as "baseband radio processor") which manages radio functions.

In various embodiments, via the transceiver 725, the processor 705 monitors for DCI outside a DRX Active Time, where the DCI contains a waveform indicator. The processor 705 determines a waveform type for a next occurring DRX Active Time and controls the transceiver 725 to receive a downlink transmission on a physical downlink channel (e.g., PDSCH and/or PDCCH) during the next occurring DRX Active Time using the determined waveform.

In some embodiments, the DCI includes a DCI-WUS. In some embodiments, the waveform indicator provides information about the usage of a single carrier waveform type or a multicarrier waveform type for reception of the physical downlink channel. In some embodiments, the location of the waveform indicator within the DCI is semi-statically configured by higher layer signaling.

In some embodiments, the DCI uses one or more code points to provide information about the waveform type to be used for the reception of the physical downlink channel. In certain embodiments, the one or more code points indicate one of: a CORESET identifier, a search space identifier, and a DCI format, where the one or more code point further indicates a corresponding waveform type for reception of the identified CORESET, search space, and/or DCI format.

In some embodiments, determining the waveform type for the next occurring DRX Active Time includes using a default waveform type when no DCI containing a waveform indicator is received at least a threshold amount of time prior to the start of the next occurring DRX Active Time. In one embodiment, the DCI contains a waveform indicator but is not received with a minimum time gap between the DCI-WUS and the next occurring DRX Active Time. In another embodiment, the waveform indicator is absent from the DCI-WUS.

In some embodiments, receiving the downlink transmission during the next occurring DRX Active Time includes receiving a second waveform indication during the DRX Active Time, the second waveform indication indicating a first waveform type for use with a dormant BWP and a second waveform type for use with a non-dormant BWP. In certain embodiments, each BWP of a SCell is configured with a default waveform type, where a same default waveform type is configured for the physical downlink channel.

In some embodiments, the DCI containing the waveform indicator includes a code point configured for non-dormant BWP of each SCell in a group, where each bit in the code point corresponds to one of the SCells in the group. In some embodiments, determining the waveform type for the next occurring DRX Active Time includes determining a waveform type for use by a dormant BWP for performing RRM measurements.

In some embodiments, the DCI containing the waveform indicator is received using a same waveform type as used to receive a CORESET for the same cell. In some embodiments, the waveform indicator further indicates a waveform type to be used during the next DRX Active Time for a physical uplink channel. In some embodiments, receiving the downlink transmission during the next occurring DRX Active Time includes receiving an uplink CG, where the uplink CG contains a second waveform indicator that indicates a waveform type to be used for uplink CG transmission.

The memory 710, in one embodiment, is a computer readable storage medium. In some embodiments, the memory 710 includes volatile computer storage media. For example, the memory 710 may include a RAM, including dynamic RAM ("DRAM"), synchronous dynamic RAM ("SDRAM"), and/or static RAM ("SRAM"). In some embodiments, the memory 710 includes non-volatile computer storage media. For example, the memory 710 may include a hard disk drive, a flash memory, or any other suitable non-volatile computer storage device. In some embodiments, the memory 710 includes both volatile and non-volatile computer storage media.

In some embodiments, the memory 710 stores data related to enhanced DM-RS configuration. For example, the memory 710 may store various parameters, panel/beam configurations, resource assignments, policies, and the like as described above. In certain embodiments, the memory 710 also stores program code and related data, such as an operating system or other controller algorithms operating on the apparatus 700.

The input device 715, in one embodiment, may include any known computer input device including a touch panel, a button, a keyboard, a stylus, a microphone, or the like. In some embodiments, the input device 715 may be integrated with the output device 720, for example, as a touchscreen or similar touch-sensitive display. In some embodiments, the input device 715 includes a touchscreen such that text may be input using a virtual keyboard displayed on the touchscreen and/or by handwriting on the touchscreen. In some embodiments, the input device 715 includes two or more different devices, such as a keyboard and a touch panel.

The output device 720, in one embodiment, is designed to output visual, audible, and/or haptic signals. In some embodiments, the output device 720 includes an electronically controllable display or display device capable of outputting visual data to a user. For example, the output device 720 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 720 may include a wearable display separate from, but communicatively coupled to, the rest of the user equipment apparatus 700, such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

In certain embodiments, the output device 720 includes one or more speakers for producing sound. For example, the output device 720 may produce an audible alert or notification (e.g., a beep or chime). In some embodiments, the output device 720 includes one or more haptic devices for producing vibrations, motion, or other haptic feedback. In some embodiments, all or portions of the output device 720 may be integrated with the input device 715. For example, the input device 715 and output device 720 may form a touchscreen or similar touch-sensitive display. In other embodiments, the output device 720 may be located near the input device 715.

The transceiver 725 communicates with one or more network functions of a mobile communication network via one or more access networks. The transceiver 725 operates under the control of the processor 705 to transmit messages, data, and other signals and also to receive messages, data, and other signals. For example, the processor 705 may selectively activate the transceiver 725 (or portions thereof) at particular times in order to send and receive messages.

The transceiver 725 includes at least transmitter 730 and at least one receiver 735. One or more transmitters 730 may be used to provide UL communication signals to a base unit 121, such as the UL transmissions described herein. Similarly, one or more receivers 735 may be used to receive DL communication signals from the base unit 121, as described herein. Although only one transmitter 730 and one receiver 735 are illustrated, the user equipment apparatus 700 may have any suitable number of transmitters 730 and receivers 735. Further, the transmitter(s) 730 and the receiver(s) 735 may be any suitable type of transmitters and receivers. In one embodiment, the transceiver 725 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 725, transmitters 730, and receivers 735 may be implemented as physically separate components that access a shared hardware resource and/or software resource, such as for example, the network interface 740.

In various embodiments, one or more transmitters 730 and/or one or more receivers 735 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 730 and/or one or more receivers 735 may be implemented and/or integrated into a multi-chip module. In some embodiments, other components such as the network interface 740 or other hardware components/circuits may be integrated with any number of transmitters 730 and/or receivers 735 into a single chip. In such embodiment, the transmitters 730 and receivers 735 may be logically configured as a transceiver 725 that uses one more common control signals or as modular transmitters 730 and receivers 735 implemented in the same hardware chip or in a multi-chip module.

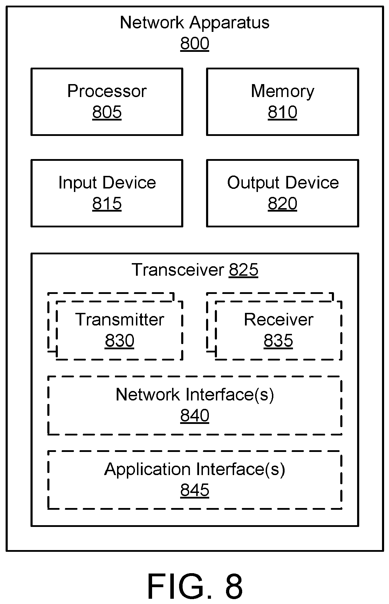

Figure 8 depicts a network apparatus 800 that may be used for performing enhanced DM-RS configuration, according to embodiments of the disclosure. In one embodiment, network apparatus 800 may be one implementation of a RAN node, such as the base unit 121 and/or the RAN node 210, as described above. Furthermore, the base network apparatus 800 may include a processor 805, a memory 810, an input device 815, an output device 820, and a transceiver 825.

In some embodiments, the input device 815 and the output device 820 are combined into a single device, such as a touchscreen. In certain embodiments, the network apparatus 800 may not include any input device 815 and/or output device 820. In various embodiments, the network apparatus 800 may include one or more of: the processor 805, the memory 810, and the transceiver 825, and may not include the input device 815 and/or the output device 820.

As depicted, the transceiver 825 includes at least one transmitter 830 and at least one receiver 835. Here, the transceiver 825 communicates with one or more remote units 85. Additionally, the transceiver 825 may support at least one network interface 840 and/or application interface 845. The application interface(s) 845 may support one or more APIs. The network interface(s) 840 may support 3GPP reference points, such as Uu, N1, N2 and N3. Other network interfaces 840 may be supported, as understood by one of ordinary skill in the art.

The processor 805, in one embodiment, may include any known controller capable of executing computer-readable instructions and/or capable of performing logical operations. For example, the processor 805 may be a microcontroller, a microprocessor, a CPU, a GPU, an auxiliary processing unit, a FPGA, or similar programmable controller. In some embodiments, the processor 805 executes instructions stored in the memory 810 to perform the methods and routines described herein. The processor 805 is communicatively coupled to the memory 810, the input device 815, the output device 820, and the transceiver 825.

In various embodiments, the network apparatus 800 is a RAN node (e.g., gNB) that communicates with one or more UEs, as described herein. In such embodiments, the processor 805 controls the network apparatus 800 to perform the above described RAN behaviors. When operating as a RAN node, the processor 805 may include an application processor (also known as "main processor") which manages application-domain and operating system ("OS") functions and a baseband processor (also known as "baseband radio processor") which manages radio functions.

In various embodiments, the processor 805 determines a waveform type for a next occurring DRX Active Time for a UE. The processor 805 controls the transceiver 825 to transmit DCI outside any DRX Active Time of the UE, where the DCI contains a waveform indicator and to transmit a downlink transmission on a physical downlink channel (e.g., PDSCH and/or PDCCH) during the next occurring DRX Active Time using the determined waveform.

In some embodiments, the DCI contains a DCI-WUS. In some embodiments, the waveform indicator provides information about the usage of a single carrier waveform type or a multicarrier waveform type for reception of the physical downlink channel. In some embodiments, the location of the waveform indicator within the DCI is semi-statically configured by higher layer signaling.

In some embodiments, the DCI uses one or more code points to provide information about the waveform type to be used for the reception of the physical downlink channel. In certain embodiments, the one or more code points indicate one of: a CORESET identifier, a search space identifier, and a DCI format, where the one or more code point further indicates a corresponding waveform type for reception of the identified CORESET, search space, and/or DCI format.

In some embodiments, transmitting the downlink transmission during the next occurring DRX Active Time includes transmitting a second waveform indication during the DRX Active Time, the second waveform indication indicating a first waveform type for use with a dormant BWP and a second waveform type for use with a non-dormant BWP. In certain embodiments, each BWP of a SCell is configured with a default waveform type, where a same default waveform type is configured for the physical downlink channel.

In some embodiments, the DCI containing the waveform indicator includes a code point configured for non-dormant BWP of each SCell in a group, where each bit in the code point corresponds to one of the SCells in the group. In some embodiments, determining the waveform type for the next occurring DRX Active Time includes determining a waveform type for use by a dormant BWP for performing RRM measurements.

In some embodiments, the DCI containing the waveform indicator is transmitted using a same waveform type as used to transmit a CORESET for the same cell. In some embodiments, the waveform indicator further indicates a waveform type to be used during the next DRX Active Time for a physical uplink channel. In some embodiments, transmitting the downlink transmission during the next occurring DRX Active Time includes sending an uplink CG for the UE, where the uplink CG contains a second waveform indicator that indicates a waveform type to be used for uplink CG transmission.

The memory 810, in one embodiment, is a computer readable storage medium. In some embodiments, the memory 810 includes volatile computer storage media. For example, the memory 810 may include a RAM, including dynamic RAM ("DRAM"), synchronous dynamic RAM ("SDRAM"), and/or static RAM ("SRAM"). In some embodiments, the memory 810 includes non-volatile computer storage media. For example, the memory 810 may include a hard disk drive, a flash memory, or any other suitable non-volatile computer storage device. In some embodiments, the memory 810 includes both volatile and non-volatile computer storage media.

In some embodiments, the memory 810 stores data related to enhanced DM-RS configuration. For example, the memory 810 may store parameters, configurations, resource assignments, policies, and the like, as described above. In certain embodiments, the memory 810 also stores program code and related data, such as an operating system or other controller algorithms operating on the apparatus 800.

The input device 815, in one embodiment, may include any known computer input device including a touch panel, a button, a keyboard, a stylus, a microphone, or the like. In some embodiments, the input device 815 may be integrated with the output device 820, for example, as a touchscreen or similar touch-sensitive display. In some embodiments, the input device 815 includes a touchscreen such that text may be input using a virtual keyboard displayed on the touchscreen and/or by handwriting on the touchscreen. In some embodiments, the input device 815 includes two or more different devices, such as a keyboard and a touch panel.

The output device 820, in one embodiment, is designed to output visual, audible, and/or haptic signals. In some embodiments, the output device 820 includes an electronically controllable display or display device capable of outputting visual data to a user. For example, the output device 820 may include, but is not limited to, an LCD display, an LED display, an OLED display, a projector, or similar display device capable of outputting images, text, or the like to a user. As another, non-limiting, example, the output device 820 may include a wearable display separate from, but communicatively coupled to, the rest of the network apparatus 800, such as a smart watch, smart glasses, a heads-up display, or the like. Further, the output device 820 may be a component of a smart phone, a personal digital assistant, a television, a table computer, a notebook (laptop) computer, a personal computer, a vehicle dashboard, or the like.

In certain embodiments, the output device 820 includes one or more speakers for producing sound. For example, the output device 820 may produce an audible alert or notification (e.g., a beep or chime). In some embodiments, the output device 820 includes one or more haptic devices for producing vibrations, motion, or other haptic feedback. In some embodiments, all or portions of the output device 820 may be integrated with the input device 815. For example, the input device 815 and output device 820 may form a touchscreen or similar touch-sensitive display. In other embodiments, the output device 820 may be located near the input device 815.

The transceiver 825 includes at least transmitter 830 and at least one receiver 835. One or more transmitters 830 may be used to communicate with the UE, as described herein. Similarly, one or more receivers 835 may be used to communicate with network functions in the PLMN and/or RAN, as described herein. Although only one transmitter 830 and one receiver 835 are illustrated, the network apparatus 800 may have any suitable number of transmitters 830 and receivers 835. Further, the transmitter(s) 830 and the receiver(s) 835 may be any suitable type of transmitters and receivers.

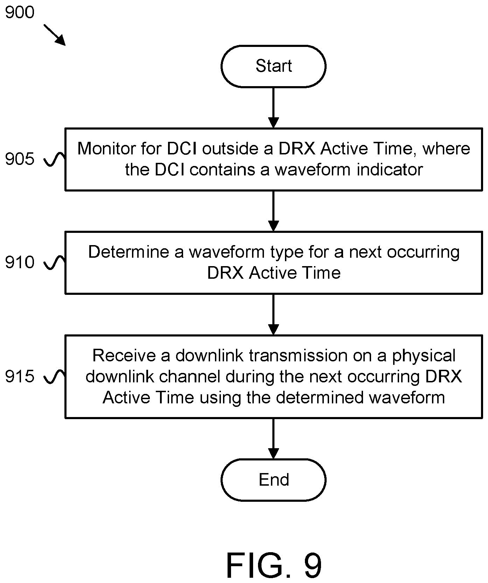

Figure 9 depicts one embodiment of a method 900 for waveform indication using DCI, according to embodiments of the disclosure. In various embodiments, the method 900 is performed by a user equipment device in a mobile communication network, such as the remote unit 105, the UE 205, and/or the user equipment apparatus 700, described above. In some embodiments, the method 900 is performed by a processor, such as a microcontroller, a microprocessor, a CPU, a GPU, an auxiliary processing unit, a FPGA, or the like.

The method 900 begins and includes monitoring 905 for DCI outside a DRX Active Time, where the DCI contains a waveform indicator. The method 900 includes determining 910 a waveform type for a next occurring DRX Active Time. The method 900 includes receiving 915 a downlink transmission on a physical downlink channel (e.g., PDSCH and/or PDCCH) during the next occurring DRX Active Time using the determined waveform. The method 900 ends.

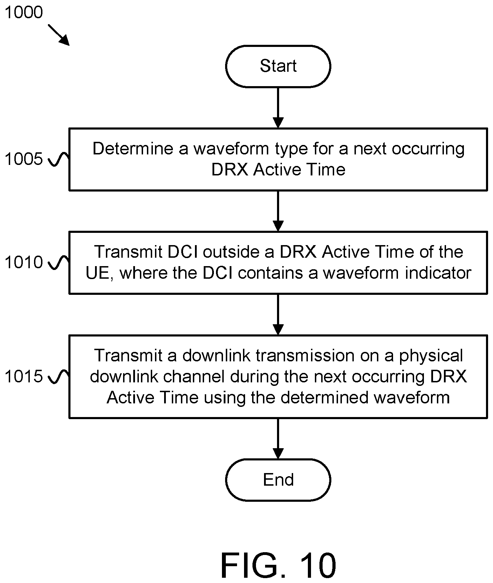

Figure 10 depicts one embodiment of a method 1000 for waveform indication using DCI, according to embodiments of the disclosure. In various embodiments, the method 1000 is performed by a RAN device in a mobile communication network, such as the base unit 121, the RAN node 210, and/or the network equipment apparatus 800, described above. In some embodiments, the method 1000 is performed by a processor, such as a microcontroller, a microprocessor, a CPU, a GPU, an auxiliary processing unit, a FPGA, or the like.

The method 1000 begins and includes determining 1005 a waveform type for a next occurring DRX Active Time for a UE. The method 1000 includes transmitting 1010 DCI outside any DRX Active Time of the UE, where the DCI contains a waveform indicator. The method 100 includes transmitting 1015 a downlink transmission on a physical downlink channel (e.g., PDSCH and/or PDCCH) during the next occurring DRX Active Time using the determined waveform. The method 1000 ends.

Disclosed herein is a first apparatus for waveform indication using DCI, according to embodiments of the disclosure. The first apparatus may be implemented by a user equipment device in a mobile communication network, such as the remote unit 105, the UE 205, and/or the user equipment apparatus 800, described above. The first apparatus includes a transceiver and a processor that monitors for DCI outside a DRX Active Time, where the DCI contains a waveform indicator. The processor determines a waveform type for a next occurring DRX Active Time, and the transceiver receives a downlink transmission on a physical downlink channel (e.g., PDSCH and/or PDCCH) during the next occurring DRX Active Time using the determined waveform.

In some embodiments, the DCI includes a DCI-WUS. In some embodiments, the waveform indicator provides information about the usage of a single carrier waveform type or a multicarrier waveform type for reception of the physical downlink channel. In some embodiments, the location of the waveform indicator within the DCI is semi-statically configured by higher layer signaling.

In some embodiments, the DCI uses one or more code points to provide information about the waveform type to be used for the reception of the physical downlink channel. In certain embodiments, the one or more code points indicate one of: a CORESET identifier, a search space identifier, and a DCI format, where the one or more code point further indicates a corresponding waveform type for reception of the identified CORESET, search space, and/or DCI format.

In some embodiments, determining the waveform type for the next occurring DRX Active Time includes using a default waveform type when no DCI containing a waveform indicator is received at least a threshold amount of time prior to the start of the next occurring DRX Active Time. In one embodiment, the DCI contains a waveform indicator but is not received with a minimum time gap between the DCI-WUS and the next occurring DRX Active Time. In another embodiment, the waveform indicator is absent from the DCI-WUS.

In some embodiments, receiving the downlink transmission during the next occurring DRX Active Time includes receiving a second waveform indication during the DRX Active Time, the second waveform indication indicating a first waveform type for use with a dormant BWP and a second waveform type for use with a non-dormant BWP. In certain embodiments, each BWP of a SCell is configured with a default waveform type, where a same default waveform type is configured for the physical downlink channel.

In some embodiments, the DCI containing the waveform indicator includes a code point configured for non-dormant BWP of each SCell in a group, where each bit in the code point corresponds to one of the SCells in the group. In some embodiments, determining the waveform type for the next occurring DRX Active Time includes determining a waveform type for use by a dormant BWP for performing RRM measurements.

In some embodiments, the DCI containing the waveform indicator is received using a same waveform type as used to receive a CORESET for the same cell. In some embodiments, the waveform indicator further indicates a waveform type to be used during the next DRX Active Time for a physical uplink channel. In some embodiments, receiving the downlink transmission during the next occurring DRX Active Time includes receiving an uplink CG, where the uplink CG contains a second waveform indicator that indicates a waveform type to be used for uplink CG transmission.

Disclosed herein is a first method for waveform indication using DCI, according to embodiments of the disclosure. The first method may be performed by a user equipment device in a mobile communication network, such as the remote unit 105, the UE 205, and/or the user equipment apparatus 800, described above. The first method includes monitoring for DCI outside a DRX Active Time, where the DCI contains a waveform indicator. The first method includes determining a waveform type for a next occurring DRX Active Time and receiving a downlink transmission on a physical downlink channel (e.g., PDSCH and/or PDCCH) during the next occurring DRX Active Time using the determined waveform.

In some embodiments, the DCI includes a DCI-WUS. In some embodiments, the waveform indicator provides information about the usage of a single carrier waveform type or a multicarrier waveform type for reception of the physical downlink channel. In some embodiments, the location of the waveform indicator within the DCI is semi-statically configured by higher layer signaling.

In some embodiments, the DCI uses one or more code points to provide information about the waveform type to be used for the reception of the physical downlink channel. In certain embodiments, the one or more code points indicate one of: a CORESET identifier, a search space identifier, and a DCI format, where the one or more code point further indicates a corresponding waveform type for reception of the identified CORESET, search space, and/or DCI format.

In some embodiments, determining the waveform type for the next occurring DRX Active Time includes using a default waveform type when no DCI containing a waveform indicator is received at least a threshold amount of time prior to the start of the next occurring DRX Active Time. In one embodiment, the DCI contains a waveform indicator but is not received with a minimum time gap between the DCI-WUS and the next occurring DRX Active Time. In another embodiment, the waveform indicator is absent from the DCI-WUS.

In some embodiments, receiving the downlink transmission during the next occurring DRX Active Time includes receiving a second waveform indication during the DRX Active Time, the second waveform indication indicating a first waveform type for use with a dormant BWP and a second waveform type for use with a non-dormant BWP. In certain embodiments, each BWP of a SCell is configured with a default waveform type, where a same default waveform type is configured for the physical downlink channel.

In some embodiments, the DCI containing the waveform indicator includes a code point configured for non-dormant BWP of each SCell in a group, where each bit in the code point corresponds to one of the SCells in the group. In some embodiments, determining the waveform type for the next occurring DRX Active Time includes determining a waveform type for use by a dormant BWP for performing RRM measurements.

In some embodiments, the DCI containing the waveform indicator is received using a same waveform type as used to receive a CORESET for the same cell. In some embodiments, the waveform indicator further indicates a waveform type to be used during the next DRX Active Time for a physical uplink channel. In some embodiments, receiving the downlink transmission during the next occurring DRX Active Time includes receiving an uplink CG, where the uplink CG contains a second waveform indicator that indicates a waveform type to be used for uplink CG transmission.

Disclosed herein is a second apparatus for waveform indication using DCI, according to embodiments of the disclosure. The second apparatus may be implemented by a RAN device in a mobile communication network, such as the base unit 121, the RAN node 210, and/or the network equipment apparatus 900, described above. The second apparatus includes a transceiver and a processor that determines a waveform type for a next occurring DRX Active Time for a UE. The processor controls the transceiver to transmit DCI outside any DRX Active Time of the UE, where the DCI contains a waveform indicator and to transmit a downlink transmission on a physical downlink channel (e.g., PDSCH and/or PDCCH) during the next occurring DRX Active Time using the determined waveform.

In some embodiments, the DCI includes a DCI-WUS. In some embodiments, the waveform indicator provides information about the usage of a single carrier waveform type or a multicarrier waveform type for reception of the physical downlink channel. In some embodiments, the location of the waveform indicator within the DCI is semi-statically configured by higher layer signaling.

In some embodiments, the DCI uses one or more code points to provide information about the waveform type to be used for the reception of the physical downlink channel. In certain embodiments, the one or more code points indicate one of: a CORESET identifier, a search space identifier, and a DCI format, where the one or more code point further indicates a corresponding waveform type for reception of the identified CORESET, search space, and/or DCI format.

In some embodiments, transmitting the downlink transmission during the next occurring DRX Active Time includes transmitting a second waveform indication during the DRX Active Time, the second waveform indication indicating a first waveform type for use with a dormant BWP and a second waveform type for use with a non-dormant BWP. In certain embodiments, each BWP of a SCell is configured with a default waveform type, where a same default waveform type is configured for the physical downlink channel.

In some embodiments, the DCI containing the waveform indicator includes a code point configured for non-dormant BWP of each SCell in a group, where each bit in the code point corresponds to one of the SCells in the group. In some embodiments, determining the waveform type for the next occurring DRX Active Time includes determining a waveform type for use by a dormant BWP for performing RRM measurements.

In some embodiments, the DCI containing the waveform indicator is transmitted using a same waveform type as used to transmit a CORESET for the same cell. In some embodiments, the waveform indicator further indicates a waveform type to be used during the next DRX Active Time for a physical uplink channel. In some embodiments, transmitting the downlink transmission during the next occurring DRX Active Time includes sending an uplink CG for the UE, where the uplink CG contains a second waveform indicator that indicates a waveform type to be used for uplink CG transmission.

Disclosed herein is a second method for waveform indication using DCI, according to embodiments of the disclosure. The second method may be performed by a RAN device in a mobile communication network, such as the base unit 121, the RAN node 210, and/or the network equipment apparatus 900, described above. The second method includes determining a waveform type for a next occurring DRX Active Time for a UE and transmitting DCI outside any DRX Active Time of the UE, where the DCI contains a waveform indicator. The second method includes transmitting a downlink transmission on a physical downlink channel (e.g., PDSCH and/or PDCCH) during the next occurring DRX Active Time using the determined waveform.

In some embodiments, the DCI includes a DCI-WUS. In some embodiments, the waveform indicator provides information about the usage of a single carrier waveform type or a multicarrier waveform type for reception of the physical downlink channel. In some embodiments, the location of the waveform indicator within the DCI is semi-statically configured by higher layer signaling.

In some embodiments, the DCI uses one or more code points to provide information about the waveform type to be used for the reception of the physical downlink channel. In certain embodiments, the one or more code points indicate one of: a CORESET identifier, a search space identifier, and a DCI format, where the one or more code point further indicates a corresponding waveform type for reception of the identified CORESET, search space, and/or DCI format.

In some embodiments, transmitting the downlink transmission during the next occurring DRX Active Time includes transmitting a second waveform indication during the DRX Active Time, the second waveform indication indicating a first waveform type for use with a dormant BWP and a second waveform type for use with a non-dormant BWP. In certain embodiments, each BWP of a SCell is configured with a default waveform type, where a same default waveform type is configured for the physical downlink channel.

In some embodiments, the DCI containing the waveform indicator includes a code point configured for non-dormant BWP of each SCell in a group, where each bit in the code point corresponds to one of the SCells in the group. In some embodiments, determining the waveform type for the next occurring DRX Active Time includes determining a waveform type for use by a dormant BWP for performing RRM measurements.

In some embodiments, the DCI containing the waveform indicator is transmitted using a same waveform type as used to transmit a CORESET for the same cell. In some embodiments, the waveform indicator further indicates a waveform type to be used during the next DRX Active Time for a physical uplink channel. In some embodiments, transmitting the downlink transmission during the next occurring DRX Active Time includes sending an uplink CG for the UE, where the uplink CG contains a second waveform indicator that indicates a waveform type to be used for uplink CG transmission.

Embodiments may be practiced in other specific forms. The described embodiments are to be considered in all respects only as illustrative and not restrictive. The scope of the invention is indicated by the appended claims rather than by the foregoing description.

## Claims

1. A method (900) of a User Equipment device, UE, the method comprising:
monitoring (905) for Downlink Control Information, DCI, outside a Discontinuous Reception, DRX, DRX Active Time, wherein the DCI comprises a waveform indicator;
determining (910) a waveform type for a next occurring DRX Active Time; and
receiving (915) a downlink transmission on a physical downlink channel during the next occurring DRX Active Time using the determined waveform.

2. A User Equipment, UE, apparatus (700) comprising:
a processor (705) arranged to:
monitor for Downlink Control Information, DCI, outside a Discontinuous Reception, DRX, DRX Active Time, wherein the DCI comprises a waveform indicator; and
determine a waveform type for a next occurring DRX Active Time; and
a transceiver (725) arranged to receive a downlink transmission on a physical downlink channel during the next occurring DRX Active Time using the determined waveform.

3. The UE apparatus (700) of claim 2, wherein the DCI comprises a DCI Wake-Up-Signal, DCI-WUS,.

4. The UE apparatus (700) of claim 2, wherein the waveform indicator provides information about the usage of a single carrier waveform type or a multicarrier waveform type for reception of the physical downlink channel.

5. The UE apparatus (700) of claim 2, wherein the location of the waveform indicator within the DCI is semi-statically configured by higher layer signaling.

6. The UE apparatus (700) of claim 2, wherein the DCI uses one or more code points to provide information about the waveform type to be used for the reception of the physical downlink channel.

7. The UE apparatus (700) of claim 6, wherein the one or more code points indicate one of: a Control Resource Set, CORESET, identifier, a search space identifier, and a DCI format, wherein the one or more code point further indicate a corresponding waveform type for reception of the identified CORESET, search space, and/or DCI format.

8. The UE apparatus (700) of claim 2, wherein determining the waveform type for the next occurring DRX Active Time comprising using a default waveform type when no DCI comprising a waveform indicator is received at least a threshold amount of time prior to the start of the next occurring DRX Active Time.

9. The UE apparatus (700) of claim 2, wherein receiving the downlink transmission during the next occurring DRX Active Time comprises receiving a second waveform indication during the DRX Active Time, the second waveform indication indicating a first waveform type for use with a dormant bandwidth part, BWP, and a second waveform type for use with a non-dormant BWP.

10. The UE apparatus (700) of claim 9, wherein each BWP of a secondary cell, SCell, is configured with a default waveform type, wherein a same default waveform type is configured for the physical downlink channel.

11. The UE apparatus (700) of claim 2, wherein the DCI comprising the waveform indicator includes a code point configured for non-dormant BWP of each secondary cell, SCell, in a group, wherein each bit in the code point corresponds to one of the SCells in the group.

12. The UE apparatus (700) of claim 2, wherein determining the waveform type for the next occurring DRX Active Time comprising determining a waveform type for use by a dormant BWP for performing Radio Resource Management, RRM, measurements.

13. The UE apparatus (700) of claim 2, wherein the DCI comprising the waveform indicator is received using a same waveform type as used to receive a Control Resource Set, CORESET, for the same cell.

14. The UE apparatus (700) of claim 2, wherein the waveform indicator further indicates a waveform type to be used during the next DRX Active Time for a physical uplink channel.

15. A Radio Access Network, RAN, apparatus (800) comprising:
a processor (805) arranged to determine a waveform type for a next occurring Discontinuous Reception, DRX, DRX Active Time for a User Equipment, UE,; and
a transceiver (825) arranged to:
transmit Downlink Control Information, DCI, outside any DRX Active Time of the UE, wherein the DCI comprises a waveform indicator; and
transmit a downlink transmission on a physical downlink channel during the next occurring DRX Active Time using the determined waveform.

## Patentansprüche

1. Verfahren (900) einer Benutzerausrüstungsvorrichtung, UE, wobei das Verfahren umfasst:
Überwachen (905) von Downlink-Steuerinformationen, DCI, außerhalb eines diskontinuierlichen Empfangs, DRX, DRX-Aktivzeit, wobei die DCI einen Wellenform indikator umfassen;
Bestimmen (910) eines Wellenformtyps für eine nächste auftretende DRX-Aktivzeit; und
Empfangen (915) einer Downlink-Übertragung auf einem physischen Downlink-Kanal während der nächsten auftretenden DRX-Aktivzeit unter Verwendung der bestimmten Wellenform.

2. Benutzerausrüstungseinrichtung (UE-Einrichtung) (700), umfassend:
einen Prozessor (705), der eingerichtet ist zum:
Überwachen von Downlink-Steuerinformationen, DCI, außerhalb eines diskontinuierlichen Empfangs, DRX, DRX-Aktivzeit, wobei die DCI einen Wellenformindikator umfassen; und
Bestimmen eines Wellenformtyps für die nächste auftretende DRX-Aktivzeit; und
einen Transceiver (725), der dazu eingerichtet ist, während der nächsten auftretenden DRX-Aktivzeit unter Verwendung der bestimmten Wellenform eine Downlink-Übertragung auf einem physischen Downlink-Kanal zu empfangen.

3. UE-Einrichtung (700) nach Anspruch 2, wobei die DCI ein DCI-Wake-Up-Signal, DCI-WUS, umfassen.

4. UE-Einrichtung (700) nach Anspruch 2, wobei der Wellenformindikator Informationen über die Nutzung eines Einzelträger-Wellenformtyps oder eines Mehrträger-Wellenformtyps für den Empfang des physischen Downlink-Kanals bereitstellt.

5. UE-Einrichtung (700) nach Anspruch 2, wobei der Ort des Wellenformindikators innerhalb der DCI durch Signalisierung auf einer höheren Ebene halbstatisch konfiguriert ist.

6. UE-Einrichtung (700) nach Anspruch 2, wobei die DCI einen oder mehrere Codepunkte verwenden, um Informationen über den Wellenformtyp bereitzustellen, der für den Empfang des physischen Downlink-Kanals verwendet werden soll.

7. UE-Einrichtung (700) nach Anspruch 6, wobei der eine oder die mehreren Codepunkte eines der folgenden angeben:
eine Control Resource Set-, CORESET-, Kennung, eine Suchraumkennung und ein DCI-Format, wobei der eine oder die mehreren Codepunkte ferner einen entsprechenden Wellenformtyp für den Empfang des identifizierten CORESET-, Suchraum- und/oder DCI-Formats angeben.

8. UE-Einrichtung (700) nach Anspruch 2, wobei das Bestimmen des Wellenformtyps für die nächste auftretende DRX-Aktivzeit das Verwenden eines Standard-Wellenformtyps umfasst, wenn keine DCI, die einen Wellenformindikator umfassen, mindestens eine Schwellenzeitspanne vor dem Beginn der nächsten auftretenden DRX-Aktivzeit empfangen werden.

9. UE-Einrichtung (700) nach Anspruch 2, wobei das Empfangen der Downlink-Übertragung während der nächsten auftretenden DRX-Aktivzeit das Empfangen einer zweiten Wellenformanzeige während der DRX-Aktivzeit umfasst, wobei die zweite Wellenformanzeige einen ersten Wellenformtyp zur Verwendung mit einem ruhenden Bandbreitenteil, BWP, und einen zweiten Wellenformtyp zur Verwendung mit einem nicht ruhenden BWP angibt.

10. UE-Einrichtung (700) nach Anspruch 9, wobei jedes BWP einer sekundären Zelle, SCell, mit einem Standardwellenformtyp konfiguriert ist, wobei derselbe Standardwellenformtyp für den physischen Downlink-Kanal konfiguriert ist.

11. UE-Einrichtung (700) nach Anspruch 2, wobei die DCI, die den Wellenformindikator umfassen, einen Codepunkt einschließt, der für das nicht ruhende BWP jeder sekundären Zelle, SCell, in einer Gruppe konfiguriert ist, wobei jedes Bit im Codepunkt einer der SCells in der Gruppe entspricht.

12. UE-Einrichtung (700) nach Anspruch 2, wobei das Bestimmen des Wellenformtyps für die nächste auftretende DRX-Aktivzeit das Bestimmen eines Wellenformtyps zur Verwendung durch ein ruhendes BWP zum Durchführen von Radio Resource Management (RRM)-Messungen umfasst.

13. UE-Einrichtung (700) nach Anspruch 2, wobei die DCI, die den Wellenformindikator umfassen, unter Verwendung desselben Wellenformtyps empfangen werden, der zum Empfangen eines Control Resource Set (CORESET) für dieselbe Zelle verwendet wird.

14. UE-Einrichtung (700) nach Anspruch 2, wobei der Wellenformindikator ferner einen Wellenformtyp angibt, der während der nächsten DRX-Aktivzeit für einen physischen Uplink-Kanal verwendet werden soll.

15. Funkzugangsnetz, RAN, inrichtung (800), umfassend:
einen Prozessor (805), der dazu eingerichtet ist, einen Wellenformtyp für einen nächsten auftretenden diskontinuierlichen Empfang, DRX, DRX-Aktivzeit für eine Benutzereinrichtung, UE, zu bestimmen; und
einen Sendeempfänger (825), der eingerichtet ist zum:
Übertragen von Downlink-Steuerinformationen, DCI, außerhalb einer DRX-Aktivzeit der UE, wobei die DCI einen Wellenformindikator umfassen; und
Übertragen, während der nächsten DRX-Aktivzeit, einer Downlink-Übertragung auf einem physischen Downlink-Kanal unter Verwendung der bestimmten Wellenform.

## Revendications

1. Procédé (900) d'un dispositif d'équipement utilisateur, UE, le procédé comprenant :
la surveillance (905) des informations de commande de liaison descendante, DCI, en dehors d'un temps d'activité DRX de réception discontinue, DRX, dans lequel la DCI comprend un indicateur de forme d'onde ;
la détermination (910) d'un type de forme d'onde pour le temps d'activité DRX suivant ; et
la réception (915) d'une transmission de liaison descendante sur un canal physique de liaison descendante pendant le temps d'activité DRX suivant, à l'aide de la forme d'onde déterminée.

2. Appareil d'équipement utilisateur, UE, (700) comprenant :
un processeur (705) agencé pour :
la surveillance des informations de commande de liaison descendante, DCI, en dehors d'un temps d'activité DRX de réception discontinue, DRX, dans lequel la DCI comprend un indicateur de forme d'onde ; et
la détermination d'un type de forme d'onde pour le temps d'activité DRX suivant ; et
un émetteur-récepteur (725) agencé pour recevoir une transmission de liaison descendante sur un canal physique de liaison descendante pendant le temps d'activité DRX suivant, à l'aide de la forme d'onde déterminée.

3. Appareil UE (700) selon la revendication 2, dans lequel la DCI comprend un signal de réveil DCI, DCI-WUS.

4. Appareil UE (700) selon la revendication 2, dans lequel l'indicateur de forme d'onde fournit des informations sur l'utilisation d'un type de forme d'onde à porteuse unique ou d'un type de forme d'onde à porteuses multiples pour la réception du canal physique de liaison descendante.

5. Appareil UE (700) selon la revendication 2, dans lequel l'emplacement de l'indicateur de forme d'onde dans la DCI est configurée de manière semi-statique par une signalisation de couche supérieure.

6. Appareil UE (700) selon la revendication 2, dans lequel la DCI utilise un ou plusieurs points de code pour fournir des informations sur le type de forme d'onde à utiliser pour la réception du canal physique de liaison descendante.

7. Appareil UE (700) selon la revendication 6, dans lequel un ou plusieurs points de code indiquent l'un des éléments suivants :
un identifiant d'ensemble de ressources de commande, CORESET, un identifiant d'espace de recherche et un format DCI, dans lequel le ou les points de code indiquent en outre un type de forme d'onde correspondant pour la réception du CORESET identifié, de l'espace de recherche et/ou du format DCI.

8. Appareil UE (700) selon la revendication 2, dans lequel la détermination du type de forme d'onde pour le temps d'activité DRX suivant consiste à utiliser un type de forme d'onde par défaut lorsqu'aucune DCI comprenant un indicateur de forme d'onde n'est reçue au moins pendant une durée seuil avant le début du temps d'activité DRX suivant.

9. Appareil UE (700) selon la revendication 2, dans lequel la réception de la transmission de liaison descendante pendant le temps d'activité DRX suivant comprend la réception d'une seconde indication de forme d'onde pendant le temps d'activité DRX, la seconde indication de forme d'onde indique un premier type de forme d'onde à utiliser avec une partie de bande passante, BWP, dormante, et un second type de forme d'onde à utiliser avec une partie de BWP non dormante.

10. Appareil UE (700) selon la revendication 9, dans lequel chaque BWP d'une cellule secondaire, SCell, est configurée avec un type de forme d'onde par défaut, dans lequel le même type de forme d'onde par défaut est configuré pour le canal physique de liaison descendante.

11. Appareil UE (700) selon la revendication 2, dans lequel la DCI comprenant l'indicateur de forme d'onde comporte un point de code configuré pour la BWP non dormante de chaque cellule secondaire, SCell, dans un groupe, dans lequel chaque bit dans le point de code correspond à l'une des SCells dans le groupe.

12. Appareil UE (700) selon la revendication 2, dans lequel la détermination du type de forme d'onde pour le temps d'activité DRX suivant consiste à déterminer un type de forme d'onde à utiliser par une BWP dormante pour effectuer des mesures de gestion des ressources radio (RRM).

13. Appareil UE (700) selon la revendication 2, dans lequel la DCI comprenant l'indicateur de forme d'onde est reçu à l'aide du même type de forme d'onde que celui utilisé pour recevoir un ensemble de ressources de commande, CORESET, pour la même cellule.

14. Appareil UE (700) selon la revendication 2, dans lequel l'indicateur de forme d'onde indique en outre un type de forme d'onde à utiliser pendant le temps d'activité DRX suivant pour un canal de liaison montante physique.

15. Appareil (800) de réseau d'accès radio, RAN, comprenant :
un processeur (805) agencé pour déterminer un type de forme d'onde pour un temps d'activité DRX de réception discontinue, DRX, suivant pour un équipement d'utilisateur (UE) ; et
un émetteur-récepteur (825) agencé pour :
la transmission des informations de commande de liaison descendante (DCI) en dehors de tout temps d'activité DRX de l'UE, dans lequel la DCI comprend un indicateur de forme d'onde ; et
la transmission d'une transmission de liaison descendante sur un canal physique de liaison descendante pendant le temps d'activité DRX suivant à l'aide de la forme d'onde déterminée.
